Europäisches Patentamt

European Patent Office

Office européen des brevets

(19)

(11) Numéro de publication: **0 522 951 B1**

# (12) FASCICULE DE BREVET EUROPEEN

(45) Date de publication du fascicule du brevet: **13.12.95** (51) Int. Cl.⁶: **G01B 11/08**

(21) Numéro de dépôt: **92401939.1**

(22) Date de dépôt: **06.07.92**

(54) **Dispositif de mesure, sans contact, du diamètre d'un objet sénsiblement cylindrique, par exemple une fibre optique**

(30) Priorité: **08.07.91 FR 9108545**

(43) Date de publication de la demande:
**13.01.93 Bulletin 93/02**

(45) Mention de la délivrance du brevet:
**13.12.95 Bulletin 95/50**

(84) Etats contractants désignés:
**DE GB**

(56) Documents cités:
EP-A- 0 348 607      EP-A- 0 400 912
WO-A-84/04158       NL-A- 7 609 627
US-A- 3 994 599      US-A- 5 015 867

**LASER FOCUS vol. 12, no. 3, Mars 1976, Newtonville, Mas., US, pp. 58-60; S. Holly : "Lateral interferometry monitors fiber diameter"**

(73) Titulaire: **FRANCE TELECOM
Etablissement autonome de droit public,
6, Place d'Alleray
F-75015 Paris (FR)**

(72) Inventeur: **Grosso, Philippe
Route de Trebeurden Servel
F-22300 Lannion (FR)**

(74) Mandataire: **Dubois-Chabert, Guy et al
c/o BREVATOME
25, rue de Ponthieu
F-75008 Paris (FR)**

Rank Xerox (UK) Business Services
(3.10/3.09/3.3.3)

## Description

La présente invention concerne un dispositif de mesure du diamètre d'un objet sensiblement cylindrique.

Ce dispositif permet une mesure, sans contact, du diamètre d'un tel objet.

La présente invention s'applique notamment à la mesure du diamètre d'une fibre optique et, tout particulièrement, à la mesure du diamètre d'une fibre optique en cours d'étirage.

On connaît déjà diverses techniques permettant de mesurer, sans contact, le diamètre d'une fibre optique, à savoir :

- les mesures photométriques, dans lesquelles la quantité de lumière masquée est proportionnelle au diamètre et qui conduisent à une faible résolution, égale à 1 micromètre,
- les mesures spatiales, dans lesquelles on forme l'image de la fibre sur un dispositif à transfert de charges ("charge coupled device" dans les publications en langue anglaise), ou cellule CCD, et qui conduisent aussi à une faible résolution, égale à 0,5 micromètre, et
- les mesures temporelles, dans lesquelles on mesure un temps d'interception d'un faisceau laser de balayage et qui conduisent également .à une faible résolution, ègale à 0,5 micromètre.

On connaît aussi une autre technique de mesure sans contact, selon laquelle on éclaire la fibre optique par un laser et on mesure l'interfrange dans la figure d'interférence qui est donnée, dans une direction choisie, par un faisceau lumineux réfracté et par un faisceau lumineux réfléchi par la fibre.

Cette autre technique est décrite dans le document (1) suivant

Thèse présentée devant l'Université de Saint Etienne par Lionel Delaunay, intitulée "Etude et réalisation d'un système de mesure du diamètre d'une fibre optique" (1986).

Elle conduit à une grande résolution, égale à 0,1 micromètre, mais présente des inconvénients :

- puisque les franges observées sont le résultat des interférences entre le faisceau réfléchi et le faisceau réfracté, dont la nature et l'intensité sont différentes, le calcul, qui est effectué dans cette autre technique pour déterminer le diamètre de la fibre, fait intervenir la qualité et, plus précisément, l'indice de réfraction de la silice dont est faite la fibre, indice qui n'est pas toujours connu à $\pm\ 10^{-5}$ près, et

- les franges d'interférence sont peu contrastées, elles sont superposées à un fond continu élevé et bruité.

Le dispositif de la présente invention est un dispositif de mesure, sans contact, du diamètre d'un objet sensiblement cylindrique, en particulier du diamètre d'une fibre optique, qui ne présente pas les inconvénients précédents, tout en conduisant aussi à une grande résolution, égale à 0,1 micromètre.

Pour ce faire, le dispositif de l'invention utilise deux faisceaux lumineux

- qui sont réfléchis par l'objet, en dehors de la figure de réfraction de celui-ci lorsqu'il s'agit d'un objet apte à réfléchir une partie d'une lumière incidente et à en transmettre une autre partie, comme par exemple une fibre optique, et
- qui résultent de l'illumination simultanée de l'objet par deux faisceaux lumineux issus d'un même laser.

On connaît, par WO-A-8 404 158, un dispositif de mesure du diamètre d'une fibre optique. Ce dispositif utilise deux faisceaux lumineux qui sont séparés par les faces - avant et arrière de la fibre et qui interfèrent l'un avec l'autre.

De manière précise, la présente invention concerne un dispositif de mesure, sans contact, du diamètre d'un objet conformément à la revendication 1.

Bien entendu, on suppose que l'objet est apte à réfléchir au moins en partie la lumière issue du laser.

La présente invention concerne également un dispositif de mesure conformément à la revendication 2.

Lesdits moyens optiques peuvent comprendre :

- des moyens de division, en deux faisceaux, du faisceau émis par le laser,
- des premier a moyens de réflexion prévus pour former le premier faisceau à partir de l'un de ces deux faisceaux issus des moyens de division, et
- des deuxièmes moyens de réflexion prévus pour former le deuxième faisceau à partir de l'autre faisceau issu des moyens de division.

Lesdits moyens de photo-détection et d'analyse peuvent comprendre :

- un dispositif à transfert de charges prévu pour recevoir les deux faisceaux réfléchis qui interfèrent l'un avec l'autre, et
- des moyens électroniques de traitement des signaux fournis par ce dispositif à transfert de charges pour déterminer le diamètre de l'objet.

De préférence, le dispositif objet de l'invention comprend en outre des moyens d'agrandissement angulaire de la distance entre les franges d'interférence, ces moyens d'agrandissement angulaire précédant les moyens de photo-détection et d'analyse.

Ceci permet de réduire la distance entre l'objet et les moyens de photo-détection et d'analyse et donc d'obtenir un dispositif de mesure plus compact.

La présente invention sera mieux comprise à la lecture de la description d'un exemple de réalisation donné ci-après à titre purement indicatif et nullement limitatif, en faisant référence aux dessins annexés sur lesquels :

- la figure 1 est une vue schématique d'un mode de réalisation particulier du dispositif objet de l'invention permettant de déterminer le diamètre d'un objet tel qu'une fibre optique par exemple, et
- la figure 2 illustre le calcul du diamètre de cette fibre optique.

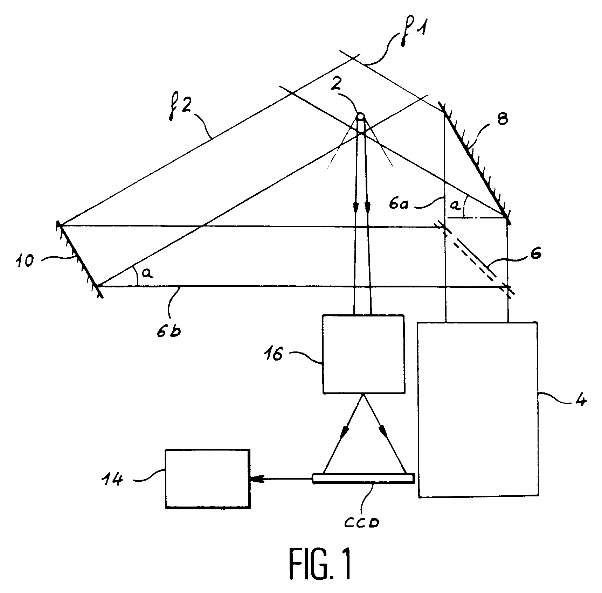

Le dispositif conforme à l'invention, qui est schématiquement représenté sur la figure 1, est destiné à déterminer le diamètre d'un objet sensiblement cylindrique, tel qu'une fibre optique.

Dans l'exemple représenté, la fibre optique 2, en silice, est issue d'une tour de fibrage et dépourvue de gaine protectrice à ce stade de sa fabrication.

Le dispositif représenté sur la figure 1 comprend :

- un laser 4, par exemple un laser He-Ne,
- une lame semi-transparente 6, qui est inclinée à 45° par rapport au faisceau issu du laser 4,
- un premier réflecteur 8 et un deuxième réflecteur 10.

La lame semi-transparente 6 est apte à transmettre une partie 6a du faisceau émis par le laser 4, l'intensité de cette partie étant la moitié de l'intensité du faisceau, et réfléchir perpendiculairement à ce faisceau une autre partie 6b de ce dernier, l'intensité de cette partie 6b étant aussi la moitié de l'intensité du faisceau.

Le premier réflecteur 8 est prévu pour intercepter la partie 6a du faisceau issu du laser et la réfléchir, formant ainsi un premier faisceau de mesure f1 dont l'inclinaison, par rapport à la partie 6b du faisceau émis par le laser 4, est notée a.

Le deuxième réflecteur 10 est prévu pour intercepter cette partie 6b du faisceau issu du laser et la réflèchir, de façon à former un deuxième faisceau de mesure f2,

- qui rencontre le faisceau de mesure f1,
- dont l'inclinaison, par rapport à la partie 6b du faisceau issu du laser, a la même valeur a que l'inclinaison du faisceau f1, et
- dont l'intensité est égale à celle du faisceau f1.

De plus, l'ensemble constitué par le laser 4, la lame 6 et les réflecteurs 8 et 10 est disposé de façon que les faisceaux f1 et f2 soient perpendiculaires à la fibre 2 dont on veut mesurer le diamètre φ et que cette fibre traverse la zone où les faisceaux f1 et f2 se rencontrent.

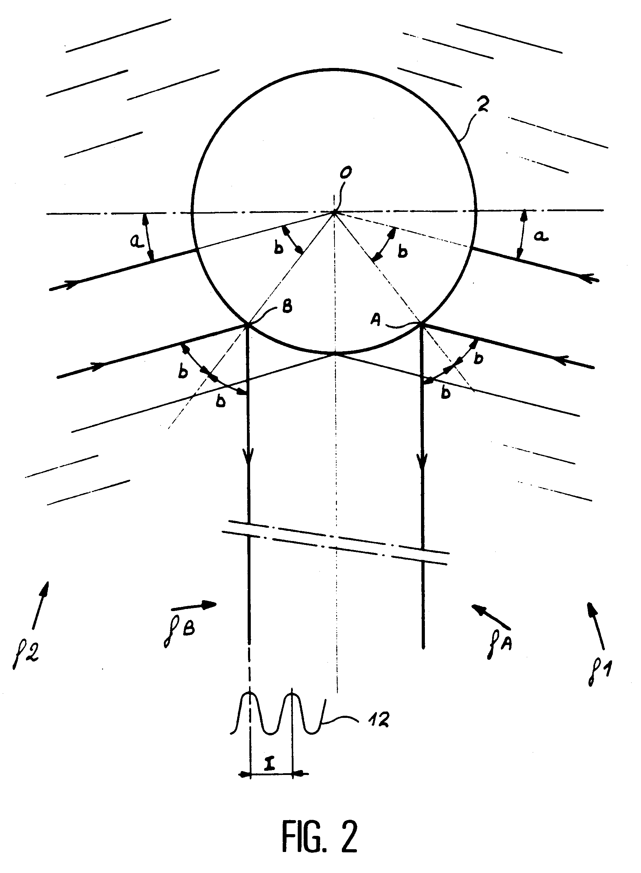

Dans ces conditions, il existe une partie du faisceau f1 qui se réfléchit en un point A de la fibre optique 2 (voir figure 2) pour donner naissance à un faisceau réfléchi fA (qui, dans l'exemple représenté, est parallèle au faisceau issu du laser 4).

De même , il existe une partie du faisceau f2 qui se réfléchit en un point B de la fibre optique 2 pour donner naissance à un faisceau réfléchi fB qui est parallèle au faisceau réfléchi fA.

Les points A et B se comportent comme des sources lumineuses secondaires de même intensité.

Les faisceaux réfléchis fA et fB, qui sont respectivement issus de ces sources A et B, ont la même intensité et interfèrent l'un avec l'autre.

De plus ces faisceaux réfléchis fA et fB sont en dehors de la figure de réfraction de la fibre optique 2, c'est-à-dire en dehors de la lumière qui résulte de la réfraction du faisceau f1 par la fibre 2 et en dehors de la lumière qui résulte de la réfraction du faisceau f2 par cette fibre 2.

Ce sont les interférences des faisceaux fA et fB que l'on mesure avec le dispositif de la figure 1 et les faisceaux lumineux réfractés qui sont formés par la fibre 2 à partir des faisceaux f1 et f2, ne sont pas dans le champ de mesure.

Le dispositif représenté sur la figure 1 comprend en outre un dispositif à transfert de charges CCD ("charge coupled device") qui intercepte les faisceaux interférents fA et fB et qui détecte les franges d'interférence 12 (figure 2).

Le dispositif représenté sur la figure 1 comprend aussi des moyens électroniques 14 de traitement des signaux fournis par le dispositif CCD, qui calculent le diamètre φ de la fibre optique à 0,1 micromètre près.

Afin de réduire la distance de projection, ou distance d'observation D, c'est-à-dire la distance entre l'axe de la fibre 2, dont on voit la trace 0 sur la figure 2, et le dispositif CCD, on dispose entre ce dernier et la fibre 2 un collimateur 16 prévu pour grossir, c'est-à-dire agrandir angulairement, l'interfrange sur le dispositif CCD qui "observe" les franges d'interférence.

On a ainsi un dispositif de mesure de plus grande compacité.

Les moyens électroniques de traitement 14 déterminent le diamètre φ de la fibre optique 2 par la formule (1) suivante :

$$\phi = L.D.I^{-1}.(\cos X)^{-1} \qquad (1)$$
$$\text{où } X = (a/2) + (pi/4).$$

Dans ces formules :

pi est le nombre bien connu qui vaut environ 3,14

a est exprimé en radians,

L est la longueur d'onde du laser 4,

I est la valeur de l'interfrange.

A une distance d'observation de 1m, une fibre dont le diamètre est de l'ordre de 125 micromètres peut se déplacer de ±1mm dans la zone d'intersection des faisceaux f1 et f2 tout en restant dans la précision de mesure (±0,1 micromètre).

Cette distance de 1m peut être ramenée à 20cm à l'aide d'un collimateur 16 de grossissement 5.

On rappelle que la valeur angulaire Ia de l'interfrange est donnée par la formule (2) suivante :

$$Ia = L.\phi^{-1}.(\cos X)^{-1} \qquad (2)$$

Pour une fibre dont le diamètre vaut 125 micromètres, un laser He-Ne et un angle a égal à 20° (l'angle b, angle entre le faisceau fA et le rayon OA de la trace de la fibre dans le plan de la figure 2, vaut 35°), la valeur angulaire de l'interfrange vaut 8,83 milliradians.

Une variation de 1 micromètre du diamètre de la fibre entraîne une variation de 70 microradians de la valeur angulaire de l'interfrange.

On notera qu'une variation de la position de la fibre dans la zone de croisement des faisceaux f1 et f2 déplace le réseau de franges d'interférence mais ne change pas la valeur angulaire de l'interfrange.

En d'autres termes, la profondeur de champ est très grande.

Elle est limitée par la largeur du faisceau issu du laser.

**Revendications**

1. Dispositif de mesure, sans contact, du diamètre d'un objet (2) sensiblement cylindrique, ce dispositif comprenant un laser (4) apte à émettre un faisceau lumineux, et étant caractérisé en ce qu'il comprend en outre:
   - des moyens optiques (6, 8, 10) prévus pour former des premier (f1) et deuxième (f2) faisceaux lumineux à partir du faisceau lumineux émis par le laser, et pour éclairer l'objet avec ces premier et deuxième faisceaux lumineux, de façon à obtenir deux faisceaux lumineux réfléchis par l'objet (2) qui interfèrent l'un avec l'autre, et
   - des moyens (CCD, 14) de photo-détection et d'analyse des interférences des deux faisceaux réfléchis, aptes à déterminer le diamètre de l'objet à partir des franges d'interférence.

2. Dispositif de mesure, sans contact, du diamètre d'un objet (2) sensiblement cylindrique, apte à réfléchir une partie d'une lumière incidente et à en transmettre une autre partie, ce dispositif comprenant un laser (4) apte à émettre un faisceau lumineux, et étant caractérisé en ce qu'il comprend en outre:
   - des moyens optiques (6, 8, 10) prévus pour former des premier (f1) et deuxième (f2) faisceaux lumineux à partir du faisceau lumineux émis par le laser, et pour éclairer l'objet avec ces premier et deuxième faisceaux lumineux, de façon à obtenir deux faisceaux lumineux réfléchis par l'objet (2), en dehors de la figure de réfraction de celui-ci, qui interfèrent l'un avec l'autre, et
   - des moyens (CCD, 14) de photo-détection et d'analyse des interférences des deux faisceaux réfléchis par l'objet, en dehors de la figure de réfraction de celui-ci, ces moyens de photo-détection et d'analyse étant aptes à déterminer le diamètre de l'objet à partir des franges d'interférence.

3. Dispositif selon l'une quelconque des revendications 1 et 2, caractérisé en ce que les moyens optiques (6, 8, 10) comprennent :
   - des moyens (6) de division, en deux faisceaux, du faisceau émis par le laser (4),
   - des premiers moyens de réflexion (8) prévus pour former le premier faisceau à partir de l'un de ces deux faisceaux issus des moyens de division (6), et
   - des deuxièmes moyens de réflexion (10) prévus pour former le deuxième faisceau à partir de l'autre faisceau issu des moyens de division (6).

4. Dispositif selon l'une quelconque des revendications 1 à 3, caractérisé en ce que les moyens (CCD, 14) de photo-détection et d'analyse comprennent :
   - un dispositif à transfert de charges (CCD) prévu pour recevoir les deux faisceaux réfléchis qui interfèrent l'un avec l'autre, et
   - des moyens électroniques (14) de traitement des signaux fournis par ce dispositif à transfert de charges pour déterminer le diamètre de l'objet (2).

5. Dispositif selon l'une quelconque des revendications 1 à 4, caractérisé en ce qu'il comprend en outre des moyens d'agrandissement angulaire de la distance entre les franges d'interférence, ces moyens d'agrandissement angulaire précédant les moyens (CCD, 14) de photodétection et d'analyse.

6. Application du dispositif selon l'une quelconque des revendications 1 à 5 à la mesure du diamètre d'une fibre optique (2).

## Claims

1. Device for measuring, without contact, the diameter of a substantially cylindrical object (2), this device comprising a laser (4) capable of emitting a light beam, and being characterized in that it also comprises:
   - optical means (6, 8, 10) designed to form first (f1) and second (f2) light beams from the light beam emitted by the laser, and to illuminate the object with these first and second light beams so as to obtain two light beams reflected by the object (2) which interfere with one another, and
   - photodetection means (CCD, 14) for analysing the interferences of the two reflected beams, capable of determining the diameter of the object from the interference fringes.

2. Device for measuring, without contact, the diameter of a substantially cylindrical object (2), capable of reflecting one part of an incident light and transmitting another part, this device comprising a laser (4) capable of emitting a light beam, and being characterized in that it also comprises:
   - optical means (6, 8, 10) designed to form first (f1) and second (f2) light beams from the light beam emitted by the laser, and to illuminate the object with these first and second light beams so as to obtain two light beams reflected by the object (2), outside the refraction figure of the latter, which interfere with one another, and
   - photodetection means (CCD, 14) for analysing the interferences of the two beams reflected by the object, outside the refraction figure of the latter, these photodetection and analysis means being capable of determining the diameter of the object from the interference fringes.

3. Device according to either one of Claims 1 and 2, characterized in that the optical means (6, 8, 10) comprise:
   - means (6) for dividing the beam emitted by the laser (4) into two beams,
   - first reflection means (8) designed to form the first beam from one of these two beams coming from the dividing means (6), and
   - second reflection means (10) designed to form the second beam from the other beam coming from the dividing means (6).

4. Device according to any one of Claims 1 to 3, characterized in that the photodetection and analysis means (CCD, 14) comprise:
   - a charge transfer device (CCD) designed to receive the two reflected beams which interfere with one another, and
   - electronic means (14) for processing the signals supplied by this charge transfer device in order to determine the diameter of the object (2).

5. Device according to any one of Claims 1 to 4, characterized in that it also comprises means for angularly increasing the distance between the interference fringes, these angular increase means preceding the photodetection and analysis means (CCD, 14).

6. Application of the device according to any one of Claims 1 to 5 to the measurement of the diameter of an optical fibre (2).

## Patentansprüche

1. Vorrichtung zur berührungslosen Messung des im wesentlichen zylindrischen Durchmessers eines Objektes (2), wobei diese Vorrichtung:
   - einen Laser (4) enthält der in der Lage ist, einen Lichtstrahl auszusenden, und der dadurch gekennzeichnet ist, daß er unter anderem folgendes enthält:
   - optische Vorrichtungen (6, 8, 10), die dafür bestimmt sind, ausgehend von dem Lichtstrahl, der von dem Laser ausgesendet wird, einen ersten (f1) und einen zweiten (f2) Lichtstrahl zu erzeugen, um das Objekt mit diesem ersten und zweiten Lichtstrahl so zu beleuchten, daß man zwei sich gegenseitig interferierende Lichtstrahlen erhält, die von dem Objekt (2) reflektiert werden, und
   - Vorrichtungen (CCD, 14) zur phototechnischen Erfassung und Analyse der Interferenzen der beiden reflektierten Lichtstrahlen, die in der Lage sind, den Durchmesser des Objektes anhand der Interferenzstreifen zu ermitteln.

2. Vorrichtung zur berührungslosen Messung des im wesentlichen zylindrischen Durchmessers eines Objektes (2), die in der Lage ist, einen Teil des einfallenden Lichts zu reflektieren und einen weiteren Teil davon weiterzuleiten, wobei diese Vorrichtung:

- einen Laser (4) enthält, der in der Lage ist, einen Lichtstrahl auszusenden, und dadurch gekennzeichnet ist, daß er unter anderem folgendes enthält:
- optische Vorrichtungen (6, 8, 10), die dafür bestimmt sind, ausgehend von dem Lichtstrahl, der von dem Laser ausgesendet wird, einen ersten (f1) und einen zweiten (f2) Lichtstrahl zu erzeugen, um das Objekt mit diesem ersten und zweiten Lichtstrahl so zu beleuchten, daß man außerhalb des Brechungsbildes dieses Objektes zwei Lichtstrahlen erhält, die von dem Objekt (2) reflektiert werden und sich gegenseitig interferieren, und
- Vorrichtungen (CCD, 14) zur phototechnischen Erfassung und Analyse der Interferenzen der beiden von dem Objekt reflektierten Lichtstrahlen außerhalb des Brechungsbildes dieses Objektes, die in der Lage sind, den Durchmesser des Objektes anhand der Interferenzstreifen zu ermitteln.

3. Vorrichtung nach einem der Ansprüche 1 und 2, dadurch gekennzeichnet, daß die optischen Vorrichtungen (6, 8, 10) folgendes umfassen:

- Vorrichtungen (6) zur Aufspaltung des von dem Laser (4) ausgesendeten Lichtstrahls in zwei Lichtstrahlen,
- erste Reflexionsvorrichtungen (8), die dazu bestimmt sind, ausgehend von diesen beiden Lichtstrahlen, die von den Aufspaltvorrichtungen (6) kommen, einen ersten Lichtstrahl zu erzeugen, und
- zweite Reflexionsvorrichtungen (10), die dazu bestimmt sind, ausgehend von dem anderen Lichtstrahl, der von den Aufspaltvorrichtungen (6) kommt, einen zweiten Lichtstrahl zu erzeugen.

4. Vorrichtung nach einem der Ansprüche 1 bis 3, dadurch gekennzeichnet, daß die Vorrichtungen (CCD, 14) zur phototechnischen Erfassung und Analyse folgendes beinhalten:

- eine Ladungsübertragungsvorrichtung (CCD), die dazu bestimmt ist, die beiden reflektierten Lichtstrahlen, die sich gegenseitig interferieren, aufzunehmen, und
- elektronische Vorrichtungen (14) zur Verarbeitung der Signale, die von dieser Ladungsübertragungsvorrichtung geliefert werden, um den Durchmesser des Objektes (2) zu ermitteln.

5. Vorrichtung nach einem der Ansprüche 1 bis 4, dadurch gekennzeichnet, daß diese unter anderem Vorrichtungen zur Vergrößerung des Winkels des Abstandes zwischen den Interferenzstreifen beinhaltet, wobei diese Winkelvergrößerungsvorrichtungen den Vorrichtungen (CCD, 14) zur phototechnischen Erfassung und Analyse vorgeschaltet sind.

6. Verwendung der Vorrichtung nach einem der Ansprüche 1 bis 5 zur Messung des Durchmessers einer Glasfaser (2).

FIG.1

7

FIG. 2